Europäisches Patentamt

European Patent Office

Office européen des brevets

(19)

(11) **EP 0 622 973 B1**

(12)

# EUROPEAN PATENT SPECIFICATION

(45) Date of publication and mention
of the grant of the patent:
**28.10.1998  Bulletin 1998/44**

(51) Int Cl.⁶: **H05B 6/68**, G01S 15/89

(21) Application number: **94302936.3**

(22) Date of filing: **25.04.1994**

(54) **Heating apparatus with ultrasonic transducer for detecting configuration of food**

Heizgerät mit einem Ultraschallwandler zur Konfigurationserfassung von Lebensmitteln

Appareil de chauffage à transducteur ultrasonore pour la détection de la configuration des aliments

(84) Designated Contracting States:
**DE FR GB**

(30) Priority:  **26.04.1993  JP 99146/93**

(43) Date of publication of application:
**02.11.1994  Bulletin 1994/44**

(73) Proprietor: **KABUSHIKI KAISHA TOSHIBA**
**Kawasaki-shi, Kanagawa-ken 210 (JP)**

(72) Inventor: **Takagi, Minoru, c/o Aichi Works**
**Seto-shi, Aichi-ken (JP)**

(74) Representative: **Freed, Arthur Woolf et al**
**MARKS & CLERK,**
**57-60 Lincoln's Inn Fields**
**London WC2A 3LS (GB)**

(56) References cited:
EP-A- 0 264 935          EP-A- 0 271 899
GB-A- 2 119 127          US-A- 4 868 357

- IEEE TRANSACTIONS ON SONICS AND
  ULTRASONICS, MAY 1979, USA, VOL. SU-26,
  NR. 3, PAGE(S) 185 - 191, ISSN 0018-9537 Smith
  S W et al 'Angular response of piezoelectric
  elements in phased array ultrasound scanners'
- ULTRASONICS, MARCH 1985, UK, VOL. 23, NR.
  2, PAGE(S) 63 - 70, February 1985, ISSN
  0041-624X Jones H W et al 'Ultrasonic lenses for
  imaging'
- IEEE TRANSACTIONS ON ULTRASONICS,
  FERROELECTRICS AND FREQUENCY
  CONTROL, JULY 1988, USA, VOL. 35, NR. 4,
  PAGE(S) 498 - 502, ISSN 0885-3010 Flory C et al
  'Diffraction minimization in SAW devices using
  wide aperture compensation'

**Description**

This invention relates to a heating apparatus provided with an ultrasonic transducer transmitting an ultrasonic wave into a heating chamber so that configuration of food accommodated in the heating chamber is detected, and more particularly to such a heating apparatus wherein the ultrasonic wave is transmitted through a hole formed through a wall of the heating chamber.

U.S. Patent No. 4,868,357 granted to Serikawa et al. discloses a microwave oven of the above-described type. In the disclosed microwave oven, configuration of food placed on a turntable in a heating chamber is detected by use of an ultrasonic transducer mounted on a side wall of the heating chamber. The result of detection of the food configuration is used to control output of a magnetron with the result of detection of a weight sensor detecting the weight of the food, so that the output of the magnetron is rendered suitable for the food.

In the above-described microwave oven, the ultrasonic transducer is mounted on the outer face of the side wall of the heating chamber. The side wall has a hole formed therethrough. An ultrasonic wave is transmitted through the through-hole into the heating chamber with the turntable carrying the food being turned. The ultrasonic wave impinges on the food and the resultant echo wave is received by the transducer. The configuration of the food is determined on the basis of the difference between the time of transmission of the ultrasonic wave and the time of reception of the echo wave.

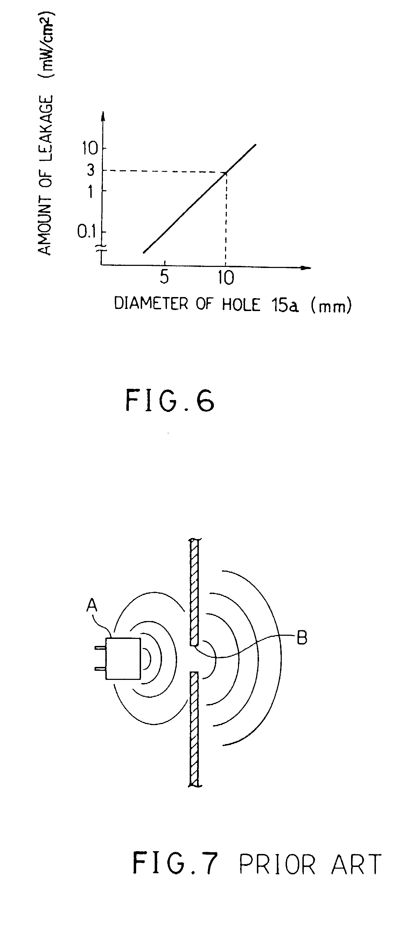

The ultrasonic wave undergoes diffraction as ordinary sound waves do. The diffraction of the ultrasonic wave is conspicuous when the diameter of a hole through which the ultrasonic wave is transmitted as described above is smaller than the wavelength of the ultrasonic wave. This is shown in FIG. 7 wherein the ultrasonic wave transmitted through a hole B from an ultrasonic transducer A is shown in the form of compressional waves. In this case, the diffraction damps, to a large extent, intensity of the ultrasonic wave transmitted through the hole B into the heating chamber. Consequently, a sufficient level of the echo wave cannot be ensured when the ultrasonic wave impinges on the food to be received by the transducer. Or, the diffraction results in a condition that a sound source is just as located in the hole B. In both cases, the error in time difference characteristic of transmission and reception of the ultrasonic transducer is amplified, which deteriorates characteristic of detection output of the ultrasonic transducer. As a result, the configuration of the food cannot be reliably detected.

Therefore, an object of the present invention is to provide a heating apparatus wherein an ultrasonic transducer is provided for transmitting an ultrasonic wave into a heating chamber through a hole formed in a wall of the heating chamber for detection of configuration of food accommodated therein and the configuration of food can be reliably detected.

In one aspect, the present invention provides a heating apparatus comprising at least one wall defining therein a heating chamber for accommodating food to be heated, the wall having at least one hole formed therethrough, heating means for heating the food in the heating chamber, an ultrasonic transducer for transmitting an ultrasonic wave through the hole of the wall into the heating chamber , the ultrasonic transducer receiving an echo wave reflected on the food, thereby generating a reception output, and determination means connected to the ultrasonic transducer for controlling an ultrasonic wave transmitting operation of the ultrasonic transducer and for determining configuration of the food on the basis of the reception output from the ultrasonic transducer, the determination means setting a heating condition for the heating means on the basis of the result of determination of the configuration of the food, wherein the apparatus comprises an outer casing and an inner casing disposed in the outer casing with a space therebetween, the ultrasonic transducer being disposed in the space between the inner and outer casings and in that the hole has a diameter larger than the wavelength of the ultrasonic wave transmitted from the ultrasonic transducer

According to the above-described construction, the ultrasonic wave transmitted from the ultrasonic transducer into the heating chamber is reflected on the food such that the echo wave is received by the ultrasonic transducer. The ultrasonic transducer generates the reception output upon reception of the echo wave, and the determination means determines the configuration of the food on the basis of the reception output of the ultrasonic transducer. Furthermore, the determination means sets the heating condition for the heating means heating the food on the basis of the result of determination of the configuration of the food.

The hole through which the ultrasonic wave is transmitted into the heating chamber has the diameter larger than the wavelength of the ultrasonic wave. Accordingly, the diffraction of the ultrasonic wave in the hole is weakened, which reduces damping of the intensity of the ultrasonic wave transmitted through the hole. Consequently, the echo wave received by the ultrasonic transducer can be maintained at a sufficient level and the position of the sound source can be prevented from being apparently displaced. As a result, the characteristic of the reception output of the ultrasonic transducer can be improved and the configuration of the food can be determined reliably by the determination means, which renders setting of the heating condition accurate.

In a preferred form, the ultrasonic transducer includes an ultrasonic transmitter and an ultrasonic receiver provided separately from each other. The wall defining the heating chamber has the first hole through which the ultrasonic wave from the ultrasonic transmitter is transmitted into the heating chamber and a second hole through which the echo wave reflected on the food in the heating chamber is received by the ultrasonic receiver. The first hole has a diameter larger than the wavelength of the ultrasonic wave transmitted from the ultrasonic transducer. In this preferred form, a transmission system and a reception system for the ultrasonic wave can be provided independently from each other.

When the first and second holes are formed in the wall of the inner casing, the second hole may have a diameter larger than the wave length of the ultrasonic wave transmitted from the ultrasonic transducer as well as the first hole. In this case, the diffraction of the ultrasonic wave in the second hole can be weakened when the echo wave reflected on the food is received through the second hole by the ultrasonic transducer.

In another preferred form, the ultrasonic transducer comprises a single element having both functions of transmitting the ultrasonic wave and receiving the echo wave thereof and the wall of the inner casing has the single hole corresponding to the element. In this preferred form, the number of parts and the number of assembly steps can be reduced.

In further another preferred form, the heating means comprises a magnetron disposed in the space defined between the inner and outer casings for supplying microwave output into the heating chamber. In this construction, an oscillation frequency of the ultrasonic transducer is set to 40 kHz or above. The diameter of the hole formed through the wall defining the heating chamber is 10 millimeters or below.

The magnetron employed in the heating apparatus is usually set to an oscillation frequency band of 2,450 MHz. An experiment shows that when the diameter of the hole through which the ultrasonic wave is transmitted from the ultrasonic transducer is above 10 millimeters, microwave supplied from the magnetron into the heating chamber leak through the hole to a large extent. Furthermore, in the case where the temperature in the heating chamber is approximately 100°C, the wavelength of the ultrasonic wave exceeds 10 millimeters in the heating chamber when the frequency of the ultrasonic wave is 40 KHz or below. Accordingly, a large amount of microwave of 2,450 MHz supplied from the magnetron into the heating chamber can be prevented from leaking through the hole when the oscillation frequency of the ultrasonic transducer is set to 40 KHz or above and the diameter of the hole is set to 10 millimeters or below. Additionally, damping of the ultrasonic wave due to the diffraction in the hole can be effectively prevented.

In further another preferred form, the ultrasonic transducer is mounted on the wall of the heating chamber. In this construction, the ultrasonic transducer is covered by a noise absorbing member. A component of the ultrasonic wave transmitted from the ultrasonic transducer is sometimes received by the same without impinging on the food. In the above-described construction, however, such a noise component can be damped by the noise absorbing member.

In further another preferred form, the heating means comprises a magnetron disposed in the space defined between the inner and outer casings for supplying microwave into the heating chamber. The ultrasonic transducer is mounted on the wall of the heating chamber In this construction, a vibration proofing member is interposed between the ultrasonic transducer and the wall. The vibration caused by the magnetron can be prevented from being transferred to the ultrasonic transducer. Consequently, the reception output of the ultrasonic transducer can be prevented from being deteriorated.

In further another preferred form, the heating apparatus further comprises a turntable rotatably mounted in the heating chamber, the food being placed on the turntable. The hole is formed in the side wall of the heating chamber so as to be opposed to a central rotational axis of the turntable. The ultrasonic wave transmitted from the ultrasonic transducer reflects on the side face of the food placed on the turntable. Consequently, the configuration of the food can be determined readily on the basis of the echo wave. Furthermore, in this heating apparatus, the determination means determines a configuration of the food accommodated in the heating chamber on the basis of the difference between a time of transmission of the ultrasonic wave and a time of reception of the ultrasonic wave by the ultrasonic transducer in a period of one turn of the turntable.

According to the above-described construction, the configuration of the food can be determined more reliably and accordingly, the heating condition for the food can be set more accurately.

The invention will be described, merely by way of example, with reference to the accompanying drawings, in which:

FIG. 1 is a longitudinally sectional view of one embodiment of a microwave oven in accordance with the present invention;
FIG. 2 is a sectional view showing the arrangement of an ultrasonic transmitter composing an ultrasonic transducer;
FIG. 3 is an electrical circuit diagram of the microwave oven;
FIG. 4 is a graph showing the changes in the level of a signal received by the ultrasonic transducer;
FIG. 5 is a diagrammatic view showing acoustic transmission of ultrasonic wave through an hole;
FIG. 6 is a graph showing the relation between the diameter of the hole and an amount of microwave leaking through the hole; and
FIG. 7 is a view similar to FIG. 5 showing the prior art.

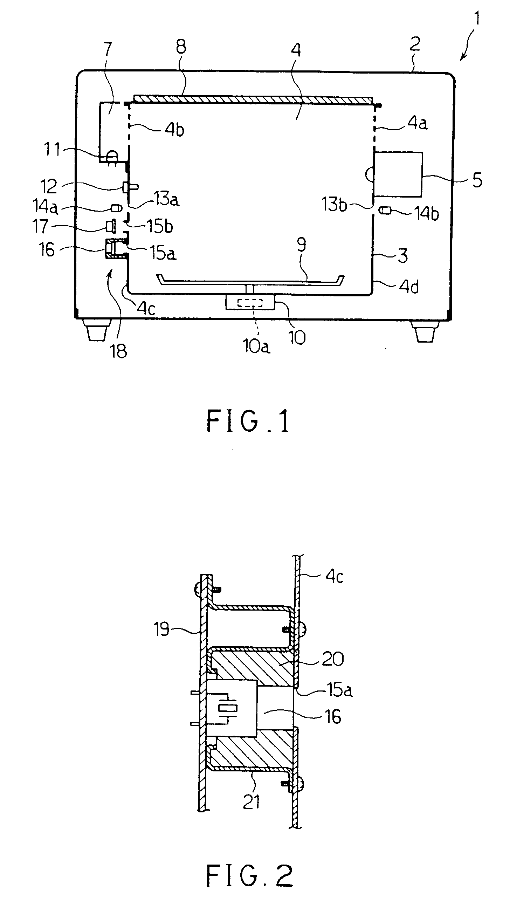

One embodiment of the present invention will be described with reference to FIGS. 1 to 6. In the embodiment, the invention is applied to a microwave oven with both oven and grilling functions.

Referring to FIG. 1, a microwave oven 1 comprises an outer casing 2 and an inner casing 3 disposed in the outer casing 2. A heating chamber 4 is defined in the inner casing 3. Food to be heated is accommodated in the heating chamber 4. A door (not shown) is mounted to close and open the front of the heating chamber 4.

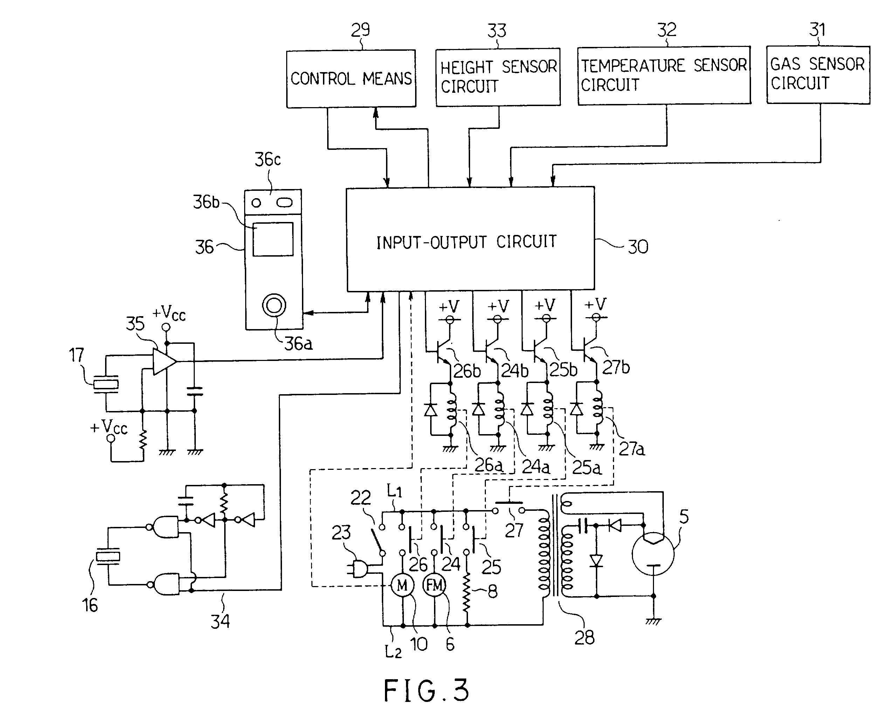

A right-hand space defined between the inner and outer casings 2, 3 serves as a component chamber, as viewed in FIG. 1. A magnetron 5 as heating means and a cooling fan for the magnetron 5 are provided in the component chamber. The cooling fan comprises a fan motor 6, as shown in FIG. 3. Microwaves produced from the magnetron 5 are supplied through a waveguide (not shown) into the heating chamber 4. Part of cooling air from the cooling fan is supplied through an inlet 4a into the heating chamber 4 and thereafter, is discharged through an outlet 4b and an exhaust duct 7. An electric heater 8 serving as another heating means is mounted on the ceiling of the heating chamber 4.

A turntable 9 is rotatably mounted on the bottom of the heating chamber 4. The food to be heated is placed on the turntable 9. The turntable 9 is rotated by an electric motor 10 with a built-in weight sensor 10a. Other means may be employed for driving the turntable 9. The weight sensor 10a generates a weight signal with a voltage level indicative of the weight of the food placed on the turntable 9.

A gas sensor 11 is provided in the exhaust duct 7. A thermistor 12 is mounted in a left-hand side wall 4c of the heating chamber 4 for the purpose of sensing the temperature in the heating chamber 4. Through apertures 13a and 13b opposite each other are formed in the left-hand and right-hand side walls 4c, 4d of the heating chamber 4 respectively. Each of the holes 13a, 13b permits light to pass therethrough and has a predetermined height. A light-emitting diode 14a and a phototransistor 14b both composing a height sensor are provided behind the holes 13a, 13b respectively. An optical axis of the light-emitting diode 14a is in accord with that of the phototransistor 14b.

First and second holes 15a and 15b are formed through the left-hand side wall 4c of the heating chamber 4 so that they are located lower than the hole 13a and are opposed to a central rotational axis of the turntable 9. The first and second holes 15a, 15b are close to each other. An ultrasonic transmitter 16 is provided behind the first hole 15a for transmitting ultrasonic wave to the food placed on the turntable 9. An ultrasonic receiver 17 is provided behind the second hole 15b for receiving an ultrasonic sonic wave reflected on the food. An ultrasonic transducer 18 is composed of the ultrasonic transmitter 16 and receiver 17. Each of the ultrasonic transmitter 16 and receiver 17 is formed of piezoelectric ceramics as well known in the art.

The frequency of the ultrasonic wave transmitted from the ultrasonic transmitter 16 is set to 40 kHz. The diameter of the first hole 15a is set to be larger than the wavelength of the ultrasonic wave transmitted from the ultrasonic transmitter 16, for example, to 10 millimeters. The wavelength of the ultrasonic wave transmitted from the ultrasonic transducer 16 changes in accordance with the temperature in the heating chamber 4 as shown in the following TABLE 1:

TABLE 1

| Wavelength in the case of wave frequency of 40 kHz | |
| --- | --- |
| Temperature in the heating chamber (°C) | Wavelength (mm) |
| 0 | 8.29 |
| 20 | 8.59 |
| 40 | 8.89 |
| 60 | 9.20 |
| 80 | 9.50 |
| 100 | 9.80 |

As understood from TABLE 1, the wavelength of the ultrasonic wave transmitted from the ultrasonic transmitter 16 is 9.80 mm even when the temperature in the heating chamber 14 is 100°C. Furthermore, since the ultrasonic transducer 18 is operated upon initiation of the heating operation, the temperature in the heating chamber 4 can be considered 100°C or below. Accordingly, the diameter of the first hole 15a is set to be larger than the wavelength of the ultrasonic wave from the ultrasonic transmitter 16. The diameter of the first hole 15a is set to 10 millimeters in consideration of allowances for the temperature in the heating chamber 4 in the embodiment. However, the diameter of the first hole 15a may be smaller if it can be maintained at a value larger than the wavelength of the ultrasonic wave from the ultrasonic transmitter 16. In order that diffraction caused during the process of receiving the echo wave reflected on the food can be reduced, the second hole 15b is desired to take the same configuration as that of the first hole 15a.

FIG. 2 illustrates a mounting structure for the ultrasonic transmitter 16. The ultrasonic transmitter 16 is mounted on a printed circuit board 19. A cylindrical felt sound absorbing member 20 is fixed on the left-hand side wall of the heating chamber 4 by mount plates 21, for example. The ultrasonic transmitter 16 is inserted into the cylindrical sound absorbing member 20 when the printed circuit board 19 is mounted on the mount plates 21 as shown in FIG. 2. As a result, the ultrasonic transmitter 16 is thus mounted on the side wall 4c of the heating chamber 4 with the sound absorbing member surrounding it.

Referring now to FIG. 3, a door switch 22 is turned on when the door of the heating chamber is closed. Main power supply lines L1 and L2 are connected via the door switch 22 to a power supply plug 23. The fan motor 6, the electric heater 8 and the motor 10 are connected via respective relay switches 24, 25 and 26 between the power supply lines L1, L2. The magnetron 5 is connected via a relay switch 27 and a high voltage drive circuit 28 between the power supply lines L1, L2.

Excitation coils 24a to 27a of the relay switches 24-27 are energized via respective transistors 24b to 27b from a power supply terminal +V. These transistors 24b-27b are controlled via an input-output circuit 30 by control means 29 so as to be turned on and off. The control means 29 serves as determination means as will be described later. The control means 29 thus controls the transistors 24b-27b, thereby controlling the magnetron 5, the fan motor 6, the electric heater 8 and the motor 10 respectively.

The weight signal generated by the weight sensor 10a of the motor 10 is supplied to the control means 29. Furthermore, the control means 29 is supplied via the input-output circuit 30 with a gas concentration signal generated by a gas sensor circuit 31, a temperature signal generated by a temperature sensor circuit 32 and a height signal generated by a height sensor circuit 33. The voltage level of the gas concentration signal is in accordance with the concentration of the gas sensed by the gas sensor 11. The voltage level of the temperature signal is in accordance with the temperature sensed by the thermistor 12. The above-mentioned weight signal, gas concentration signal and temperature signal are converted by an analog-to-digital (A/D) converter (not shown) to respective corresponding digital signals and then are supplied to the control means 29, as well known in the art.

The height sensor circuit 33 includes the above-described light-emitting diode 14a and phototransistor 14b. When supplied with a command signal from the control means via the input-output circuit 30, the height sensor circuit 33 turns on the light-emitting diode 14a so that it emits light. The height sensor circuit 33 generates the height signal when the light emitted from the light-emitting diode is received by the phototransistor 14b.

An oscillation circuit 34 oscillates in response to a drive command signal (high-level signal) supplied thereto from the control means 29 via the input-output circuit 30. An oscillation output of the oscillation circuit 34 is supplied to the ultrasonic transmitter 16, thereby operating the same. The ultrasonic receiver 17 generates a voltage signal in accordance with the received echo wave. The voltage signal is supplied to a buffer amplifier 35, which further supplies a corresponding digital signal to the control means 29 via the input-output circuit 30.

Referring further to FIG. 3, an operation panel 36 is provided on the front of the microwave oven 1, including a start button 36a, various operation keys 36b and a display 36c. Operation signals from the operation panel 36 are supplied via the input-output circuit 30 to the control means 29. The display 36c is controlled by the control means 29.

The control means 29 is composed of a microcomputer and executes a heating control operation on the basis of the above-described input signals and a program previously stored therein.

The operation of the control means 29 will be described with its related operation. Upon operation of the start button 36a of the operation panel 36, the operation of the control means 29 is initiated when the voltage level of the weight signal from the weight sensor 10a is at a predetermined value or above or when the food is placed on the turntable. First, the turntable 9 is rotated and the drive command signal is supplied to the oscillation circuit 34 so that the ultrasonic transmitter 16 is operated. The drive command signal is intermittently delivered in such intervals that the transmitted ultrasonic wave and the echo wave do not interfere with each other. Consequently, the ultrasonic wave is transmitted from the ultrasonic transmitter 16 to be in the form of a burst wave. The ultrasonic wave is reflected on the food placed on the turntable 9. The reflected or echo wave is received by the ultrasonic receiver 17.

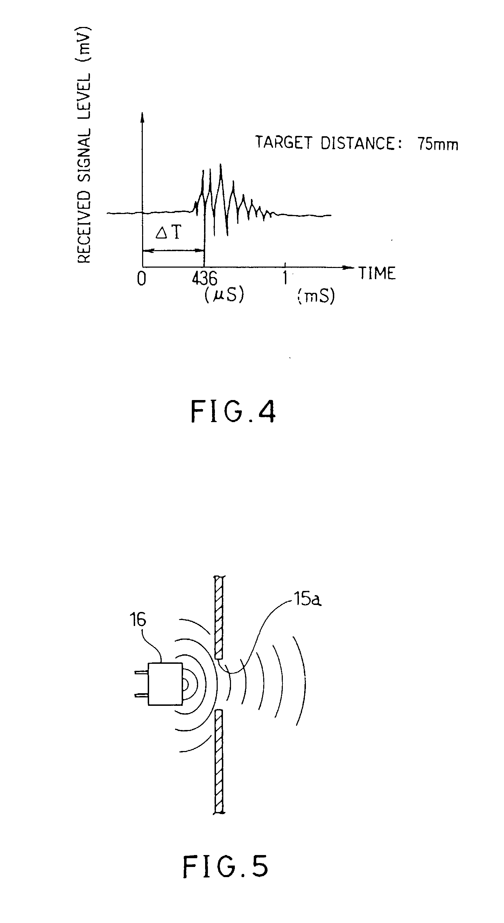

The control means 29 stores signal data indicative of the phase difference between the ultrasonic wave transmitted from the transmitter 16 and the echo wave received by the receiver 17. Based on the signal data, the control means 29 determines whether a response time T is as long as or shorter than a reference time $\Delta T$. The response time T is defined as a period of time between delivery of the drive command signal to the oscillation circuit 34 and input of the voltage signal via the buffer amplifier 35. FIG. 4 shows the changes in the level of a signal received by the receiver 17 on the basis of the time of transmission of the ultrasonic wave from the transmitter 16. A target distance refers to a reference distance employed for determining presence or absence of the food on the basis of the level of the echo wave. When the target distance is 75 millimeters and the propagation velocity of the ultrasonic wave is 344 meters per second, for example, a period of time from transmission of the ultrasonic wave from the transmitter 16 to the time the ultrasonic wave is reflected on an object located within the target distance is obtained as follows:

$$75 \times 2 \div (344 \times 10^3) = 436 \ (\mu second).$$

This period of time is set as the above-mentioned reference time $\Delta T$. Since the propagation velocity of the ultrasonic wave is increased as the ambient temperature rises, the reference time $\Delta T$ needs to be compensated in accordance with the rise of the ambient temperature.

A predetermined threshold level (e.g., 20 mV) is set with respect to an input sensitivity of the voltage signal in order that undesired signals such as so-called echo-back in which the wave is reflected on the walls of the heating chamber 4 or the like but not on the object or food are eliminated. When the input voltage signal is at the threshold level or above, the receiver 17 is qualified to be in a receiving state.

On the other hand, an internal timer is operated when the response time T is shorter than the reference time $\Delta$T. The timing operation is continued until it is determined that the response time T has become longer than the reference time $\Delta$T. Accordingly, a period $\Sigma$T timed by the internal timer corresponds to a period for which the response time T is maintained at the reference time $\Delta$T or below.

When the response time T is once decreased to the reference time $\Delta$T or below and thereafter exceeds the reference time $\Delta$T, it is determined that the food is already absent in the range of the target distance of 75 millimeters. In this case, the count value N of an internal counter (not shown) is incremented by "1." Subsequently, it is determined whether the turntable 9 has been turned by one turn or not. When the turntable 9 is not turned by one turn, it is determined whether or not the distance to the food is again 75 millimeters or longer. Consequently, the count value N indicates the number of times that the response time T is once decreased to the reference time $\Delta$T or below and thereafter exceeds the reference time $\Delta$T or the number of times that the distance D between the ultrasonic transducer 18 and the food is decreased to 75 millimeters or below. The count value N becomes "0" when the distance D is 75 millimeters or above while the turntable 9 is turned by one turn or when the distance D is 75 millimeters or below. The ultrasonic transmitter 16 is turned off when it is determined that the turntable 9 has been turned by one turn.

Thereafter, the control means 29 recognizes the configuration and the number of food placed on the turntable 9 on the basis of the count value N and the timed period $\Sigma$T of the internal counter. In the recognizing operation, the kind of food to be heated is determined on the basis of various factors. These factors include, for example, a selected heating mode, the size of the food indicated by the timed period $\Sigma$T, the detailed configuration of the food indicated by change patterns of the response time T in the range of the reference time $\Delta$T or below, the weight of the food indicated by the weight signal from the weight sensor 10a, the height of the food indicated by the height signal from the height sensor circuit 33, component characteristics of the food indicated by the changes of the gas concentration signal from the gas sensor circuit 31 and the like. The above-mentioned heating mode includes a range mode, an oven mode and a grill mode. The selection of the heating mode is based on the detection of features of utensils used in the cooking or setting input to the operation panel 36.

After the above-described recognition of the kind of food, the magnetron 5 or the electric heater 8 is operated in a heating procedure in accordance with the determined kind of food. Then, the heating control is performed wherein a heating temperature and time are rendered suitable for the food. The control program is completed upon completion of the heating control.

FIG. 5 diagrammatically illustrates acoustic transmission of the ultrasonic wave from the transmitter 16 in the form of compression waves. As shown, a large diffraction is not caused when the ultrasonic wave passes through the first hole 15a. Accordingly, the ultrasonic wave transmitted into the heating chamber 4 is prevented from being damped. On the other hand, in the case where the diameter of the hole is smaller than the wavelength of the ultrasonic wave, the diffraction become conspicuous when the ultrasonic wave passes through the hole, as shown in FIG. 7. Consequently, since the ultrasonic wave having passed through the hole 15a is transmitted as the result of diffraction as if the hole is a sound source, the intensity of the ultrasonic wave is decreased to a large extent.

It is desirable that the diameter of the first hole 15a is as large as possible. However, the microwave from the magnetron 5 leaks through the hole 15a out of the heating chamber 4 when the diameter of the hole 15a is set to an excessively large value. FIG. 6 shows the relation between the diameter of the hole 15a and an amount of microwave leaking through the hole 15a in the case where the oscillation frequency of the magnetron is set to the band of 2,450 MHz. As shown, the amount of microwave leaking through the hole 15a is exponentially increased as its diameter is increased. When the diameter of the first hole 15a is 10 millimeters as in the embodiment, the amount of microwave leaking through the hole 15a is 3 mW/cm$^2$, which value is extremely small. Consequently, the first hole 15a is suitable both for allowing the ultrasonic wave to pass therethrough and for preventing the microwave from leaking therethrough.

According to the above-described embodiment, the first hole 15a is formed through the side wall 4c of the heating chamber 4 so that the ultrasonic wave is transmitted therethrough. The ultrasonic wave undergoes the diffraction when passing through the hole 15a. However, since the diameter of the hole 15a is set to be larger than the wavelength of the ultrasonic wave transmitted from the ultrasonic transducer 18, the diffraction of the ultrasonic wave is weakened. Consequently, damping of the intensity of the ultrasonic wave transmitted through the hole 15a can be reduced and the location of the sound source can be prevented from being apparently displaced. Accordingly, the output characteristic of the ultrasonic transducer can be improved and the configuration of the food can be reliably determined by the control means 29. As a result, the heating condition can be accurately set.

The wave frequency of the ultrasonic transducer 18 is set to 40 KHz and the diameter of the first hole 15a through which the ultrasonic wave is transmitted is set to 10 millimeters in the foregoing embodiment. Consequently, the microwave from the magnetron 5 can be prevented from leaking through the hole 15a.

The ultrasonic receiver 17 is surrounded by the sound absorbing member 20 in the foregoing embodiment. Even when the component of the transmitted ultrasonic wave is contained in the ultrasonic wave received by the ultrasonic receiver 17, the component is damped by the sound absorbing member 20. Influences due to the interference between the component and the echo wave reflected on the food can be prevented. Consequently, the determination can be reliably made as to whether the food is present away by the target distance or not.

Although the ultrasonic transducer 18 comprises the separate transmitter 16 and receiver 17 in the foregoing embodiment, they may be composed of a single piezoelectric ceramic plate. In this case, since the side wall 4c of the heating chamber 4 has only one hole, the number of parts and the number of assembly steps can be reduced.

Furthermore, the sound absorbing member 20 employed in the foregoing embodiment may be replaced by a vibration proofing member. More specifically, a cylindrical vibration proofing member formed from foaming chloroprene rubber is fixed on the side wall 4c by the mount plates 21, for example. The ultrasonic receiver 17 is forced into the vibration proofing member in the condition that the printed circuit board 19 is mounted on the mount plates 21, so that the vibration proofing member is interposed between the ultrasonic receiver 17 and the side wall 4c of the heating chamber 4. Since vibration produced by the magnetron 5 can be prevented from transferring to the ultrasonic transducer 18, the output of the ultrasonic transducer 18 can be prevented from being deteriorated.

Although the ultrasonic transducer 18 is mounted on the side wall 4c of the heating chamber 4 in the foregoing embodiment, it may be mounted on a ceiling or bottom of the heating chamber 4.

## Claims

1. A heating apparatus comprising at least one wall (4c) defining therein a heating chamber (4) for accommodating food to be heated, the wall (4c) having at least one hole (15a) formed therethrough, heating means (5; 8) for heating the food in the heating chamber (4), an ultrasonic transducer (18) for transmitting an ultrasonic wave through the hole (15a) of the wall (4) into the heating chamber (4), the ultrasonic transducer (18) receiving an echo wave reflected on the food, thereby generating a reception output, and determination means (29) connected to the ultrasonic transducer (18) for controlling an ultrasonic wave transmitting operation of the ultrasonic transducer (18) and for determining configuration of the food on the basis of the reception output from the ultrasonic transducer (18), the determination means (29) setting a heating condition for the heating means (5; 8) on the basis of the result of determination of the configuration of the food, characterized in that the apparatus comprises an outer casing (2) and an inner casing (3) disposed in the outer casing (2) with a space therebetween, the ultrasonic transducer (18) being disposed in the space between the inner and outer casings (2,3) and in that the hole (15a) has a diameter larger than the wavelength of the ultrasonic wave transmitted from the ultrasonic transducer (18).

2. A heating apparatus according to claim 1, wherein the ultrasonic transducer (18) includes an ultrasonic transmitter (16) and an ultrasonic receiver (17) provided separately from each other, and wherein the wall (4c) defining the heating chamber (4) has the first hole (15a) through which the ultrasonic wave from the ultrasonic transmitter (16) is transmitted into the heating chamber (4) and a second hole (15b) through which the echo wave reflected on the food in the heating chamber (4) is received by the ultrasonic receiver (17), in that the first hole (15a) has a diameter larger than the wave length of the ultrasonic wave transmitted from the ultrasonic transducer (18).

3. A heating apparatus according to claim 2, further characterized in that the second hole (15b) has a diameter larger than the wave length of the ultrasonic wave transmitted from the ultrasonic transducer (18).

4. A heating apparatus according to claim 1, wherein the ultrasonic transducer (18) comprises a single element having both functions of transmitting and receiving the ultrasonic wave further characterized in that the wall (4c) of the inner casing (3) has the single hole (15a) corresponding to the element.

5. A heating apparatus according to claim 1, wherein the heating means (5; 8) comprises a magnetron (5) disposed in the space defined between the inner and outer casings (2, 3) for supplying microwave into the heating chamber (4), in that an oscillation frequency of the ultrasonic transducer (18) is set for 40 kHz or above, and that the diameter of the hole (15a) formed through the wall (4c) defining the heating chamber (4) is 10 millimeters or below.

6. A heating apparatus according to claim 1, wherein the ultrasonic transducer (18) is mounted on the wall (4c) of the heating chamber (4), the ultrasonic transducer (18) mounted on the wall (4c) being covered by a noise absorbing member (20).

7. A heating apparatus according to claim 1, wherein the heating means (5; 8) comprises a magnetron (5) disposed in the space defined between the inner and outer casings (2, 3) for supplying microwave into the heating chamber (4) and wherein the ultrasonic transducer (18) is mounted on the wall (4c) of the heating chamber (4), a vibration proofing member being interposed between the ultrasonic transducer (18) and the wall (4c).

8. A heating apparatus according to claim 1, wherein a turntable (9) on which the food is placed is rotatably mounted in the heating chamber (4), and wherein the hole (15a) is formed in the side wall (4c) of the heating chamber (4) so as to be opposed to a central rotational axis of the turntable (9).

9. A heating apparatus according to claim 8, wherein the determination means (29) determines a configuration of the food accommodated in the heating chamber (4) on the basis of the difference between the time of transmission of the ultrasonic wave and the time of reception of the ultrasonic wave by the ultrasonic transducer (19) in a period of one turn of the turntable (9).

**Patentansprüche**

1. Heizgerät, aufweisend mindestens eine Wand (4c), die darin eine Heizkammer (4) definiert, um zu erhitzende Nahrungsmittel aufzunehmen, wobei die Wand (4c) mindestens ein in ihr gebildetes Loch (15a) hat, Heizmittel (5; 8), um die Nahrungsmittel in der Heizkammer (4) zu erhitzen, einen Ultraschallwandler (18), um eine Ultraschallwelle durch das Loch (15a) der Wand (4) in die Heizkammer (4) hinein zu senden, wobei der Ultraschallwandler (18) eine von den Nahrungsmitteln reflektierte Echowelle empfängt, wodurch ein Empfangs-Ausgangssignal erzeugt wird, und mit dem Ultraschallwandler (18) verbundene Bestimmungsmittel (29), um einen Ultraschallwellen-Sendevorgang des Ultraschallwandlers (18) zu steuern, und um die Konfiguration der Nahrungsmittel auf der Basis des Empfangs-Ausgangssignals des Ultraschallwandlers (18) zu bestimmen, wobei die Bestimmungsmittel (29) einen Heizzustand für die Heizmittel (5; 8) auf der Basis des Ergebnisses der Bestimmung der Konfiguration der Nahrungsmittel festlegen, dadurch gekennzeichnet, daß das Gerät ein äußeres Gehäuse (2) und ein in dem äußeren Gehäuse (2) mit einem Zwischenraum angeordnetes, inneres Gehäuse (3) aufweist, wobei der Ultraschallwandler (18) in dem Zwischenraum zwischen dem inneren und dem äußeren Gehäuse (2, 3) angeordnet ist, und daß das Loch (15a) einen Durchmesser hat, der größer als die Wellenlänge der von dem Ultraschallwandler (18) ausgesendeten Ultraschallwelle ist.

2. Heizgerät gemäß Anspruch 1, wobei der Ultraschallwandler (18) einen Ultraschallsender (16) und einen Ultraschallempfänger (17) umfaßt, die getrennt voneinander angeordnet sind, und wobei die Wand (4c), die die Heizkammer (4) definiert, das erste Loch (15a) hat, durch das die Ultraschallwelle von dem Ultraschallsender (16) in die Heizkammer (4) gesendet wird, und ein zweites Loch (15b) hat, durch das die von den Nahrungsmitteln in der Heizkammer (4) reflektierte Echowelle von dem Ultraschallempfänger (17) empfangen wird, dadurch gekennzeichnet, daß das erste Loch (15a) einen Durchmesser hat, der größer als die Wellenlänge der von dem Ultraschallwandler (18) ausgesendeten Ultraschallwelle ist.

3. Heizgerät gemäß Anspruch 2, weiterhin dadurch gekennzeichnet, daß das zweite Loch (15b) einen Durchmesser hat, der größer als die Wellenlänge der von dem Ultraschallwandler (18) ausgesendeten Ultraschallwelle ist.

4. Heizgerät gemäß Anspruch 1, wobei der Ultraschallwandler (18) ein einzelnes Element aufweist, das beide Funktionen, nämlich Senden und Empfangen der Ultraschallwelle, ausführt, weiterhin dadurch gekennzeichnet, daß die Wand (4c) des inneren Gehäuses (3) das dem Element entsprechende, einzelne Loch (15a) hat.

5. Heizgerät gemäß Anspruch 1, wobei die Heizmittel (5; 8) ein in dem zwischen dem inneren und dem äußeren Gehäuse (2, 3) definierten Zwischenraum angeordnetes Magnetron (5) aufweisen, um Mikrowellen in die Heizkammer (4) zu senden, dadurch gekennzeichnet, daß die Schwingungsfrequenz des Ultraschallwandlers (18) auf 40 kHz oder mehr eingestellt ist, und daß der Durchmesser des Lochs (15a), das in der die Heizkammer (4) definierenden Wand (4c) gebildet ist, 10 Millimeter oder weniger beträgt.

6. Heizgerät gemäß Anspruch 1, wobei der Ultraschallwandler (18) auf der Wand (4c) der Heizkammer (4) angebracht ist, und von einem geräuschabsorbierenden Element (20) bedeckt ist.

7. Heizgerät gemäß Anspruch 1, wobei die Heizmittel (5; 8) ein in dem zwischen dem inneren und dem äußeren Gehäuse (2, 3) definierten Zwischenraum angeordnetes Magnetron (5) aufweisen, um Mikrowellen in die Heizkammer (4) zu senden, und wobei der Ultraschallwandler (18) auf der Wand (4c) der Heizkammer (4) angebracht ist, und ein vibrationsfestes Element zwischen dem Ultraschallwandler (18) und der Wand (4c) angeordnet ist.

8. Heizgerät gemäß Anspruch 1, wobei ein Drehtisch (9), auf den die Nahrungsmittel gelegt werden, in der Heizkammer (4) drehbar angebracht ist, und wobei das Loch (15a) in der Seitenwand (4c) der Heizkammer (4) so gebildet ist, daß es einer zentralen Drehachse des Drehtischs (9) gegenüberliegt.

9. Heizgerät gemäß Anspruch 8, wobei die Bestimmungsmittel (29) die Konfiguration der in der Heizkammer (4) angeordneten Nahrungsmittel auf der Basis der Differenz zwischen dem Zeitpunkt der Aussendung der Ultraschallwelle und dem Zeitpunkt des Empfangs der Ultraschallwelle durch den Ultraschallwandler (18) während einer Dauer von einer Umdrehung des Drehtischs (9) bestimmen.

**Revendications**

1. Appareil de chauffage comprenant au moins une paroi (4c) définissant à l'intérieur une chambre de chauffage (4) destinée à recevoir un aliment à chauffer, la paroi (4c) étant traversée par au moins un trou (15a), des moyens de chauffage (5; 8) pour chauffer l'aliment dans la chambre de chauffage (4), un transducteur ultrasonore (18) pour transmettre une onde ultrasonore à travers le trou (15a) de la paroi (4), pour qu'elle entre dans la chambre de chauffage (4), le transducteur ultrasonore (18) recevant une onde d'écho qui est réfléchie sur l'aliment, pour générer ainsi un signal de sortie de réception, et des moyens de détermination (29) connectés au transducteur ultrasonore (18), pour commander une opération d'émission d'onde ultrasonore du transducteur ultrasonore (18), et pour déterminer une configuration de l'aliment sur la base du signal de sortie de réception provenant du transducteur ultrasonore (18), les moyens de détermination (29) établissant une condition de chauffage pour les moyens de chauffage (5; 8) sur la base du résultat de la détermination de la configuration de l'aliment, caractérisé en ce que l'appareil comprend une enveloppe extérieure (2) et une enveloppe intérieure (3) disposée dans l'enveloppe extérieure (2) avec un espace entre elles, le transducteur ultrasonore (18) étant disposé dans l'espace compris entre les enveloppes intérieure et extérieure (2, 3), et en ce que le trou (15a) a un diamètre supérieur à la longueur d'onde de l'onde ultrasonore qui est émise par le transducteur ultrasonore (18).

2. Appareil de chauffage selon la revendication 1, dans lequel le transducteur ultrasonore (18) comprend un émetteur ultrasonore (16) et un récepteur ultrasonore (17) qui sont établis séparément l'un de l'autre, et dans lequel la paroi (4c) définissant la chambre de chauffage (4) comporte le premier trou (15a) à travers lequel l'onde ultrasonore provenant de l'émetteur ultrasonore (16) est émise vers l'intérieur de la chambre de chauffage (4), et un second trou (15b) à travers lequel l'onde d'écho qui est réfléchie sur l'aliment dans la chambre de chauffage (4) est reçue par le récepteur ultrasonore (17), et le premier trou (15a) a un diamètre supérieur à la longueur d'onde de l'onde ultrasonore qui est émise par le transducteur ultrasonore (18).

3. Appareil de chauffage selon la revendication 2, caractérisé en outre en ce que le second trou (15b) a un diamètre supérieur à la longueur d'onde de l'onde ultrasonore qui est émise par le transducteur ultrasonore (18).

4. Appareil de chauffage selon la revendication 1, dans lequel le transducteur ultrasonore (18) comprend un seul élément ayant à la fois les fonctions d'émission et de réception de l'onde ultrasonore, caractérisé en outre en ce que la paroi (4c) de l'enveloppe intérieure (3) comporte le trou unique (15a) correspondant à l'élément.

5. Appareil de chauffage selon la revendication 1, dans lequel les moyens de chauffage (5; 8) comprennent un magnétron (5) disposé dans l'espace qui est défini entre les enveloppes intérieure et extérieure (2, 3), pour fournir de l'énergie micro-onde à l'intérieur de la chambre de chauffage (4), une fréquence d'oscillation du transducteur ultrasonore (18) est fixée à 40 kHz ou plus, et le diamètre du trou (15a) qui est formé à travers la paroi (4c) définissant la chambre de chauffage (4) est de 10 millimètres ou moins.

6. Appareil de chauffage selon la revendication 1, dans lequel le transducteur ultrasonore (18) est monté sur la paroi (4c) de la chambre de chauffage (4), le transducteur ultrasonore (18) monté sur la paroi (4c) étant recouvert par un élément absorbant le bruit (20).

7. Appareil de chauffage selon la revendication 1, dans lequel les moyens de chauffage (5; 8) comprennent un magnétron (5) disposé dans l'espace qui est défini entre les enveloppes intérieure et extérieure (2, 3), pour fournir de l'énergie micro-onde à l'intérieur de la chambre de chauffage (4), et dans lequel le transducteur ultrasonore (18) est monté sur la paroi (4c) de la chambre de chauffage (4), un élément anti-vibration étant interposé entre le transducteur ultrasonore (18) et la paroi (4c).

8. Appareil de chauffage selon la revendication 1, dans lequel un plateau tournant (9) sur lequel l'aliment est placé est monté de façon tournante dans la chambre de chauffage (4), et dans lequel le trou (15a) est formé dans la paroi latérale (4c) de la chambre de chauffage (4), de façon à se trouver face à un axe de rotation central du plateau tournant (9).

9. Appareil de chauffage selon la revendication 8, dans lequel les moyens de détermination (29) déterminent une configuration de l'aliment qui se trouve dans la chambre de chauffage (4) sur la base de la différence entre l'instant d'émission de l'onde ultrasonore et l'instant de réception de l'onde ultrasonore par le transducteur ultrasonore (18), sur une période d'un tour du plateau tournant (9).

FIG.1

FIG.2

FIG.3

GAS SENSOR CIRCUIT — 31

TEMPERATURE SENSOR CIRCUIT — 32

HEIGHT SENSOR CIRCUIT — 33

CONTROL MEANS — 29

INPUT-OUTPUT CIRCUIT — 30

27b 27a
25b 25a
24b 24a
26b 26a

+V

5
28
27 25 8 24 26
22 23
L1 L2
FM M 6 10

35 +Vcc 36a 36c 36b 36

17 +Vcc

34 16

FIG.4

FIG.5

FIG.6

FIG.7 PRIOR ART